# FASCICULE DE BREVET EUROPEEN

(11) **EP 3 454 097 B1**
(45) Date de publication et mention de la délivrance du brevet: **21.12.2022**
(21) Numéro de dépôt: 18193830.9
(22) Date de dépôt: 11.09.2018
(51) Int. Cl.: G02B 3/08, F21V 5/04, G02B 5/02, G02B 5/18, G02B 27/00

(54) **LENTILLE DE MISE EN FORME DE RAYONS LUMINEUX POUR UN MODULE LUMINEUX D'ECLAIRAGE ET/OU DE SIGNALISATION D'UN VEHICULE AUTOMOBILE**
LINSE ZUR STRAHLFORMUNG FÜR EINE BELEUCHTUNGS-UND/ODER SIGNALEINRICHTUNG EINES FAHRZEUGS
BEAM SHAPING LENS FOR A LIGHTING MODULE AND/OR A SIGNAL MODULE OF AN AUTOMOBILE

(30) Priorité: 12.09.2017 FR 1758438
(43) Date de publication de la demande: 13.03.2019
(73) Titulaire: Valeo Vision, 93012 Bobigny Cedex (FR)
(72) Inventeur: LEFAUDEUX, Nicolas, 93012 BOBIGNY Cedex (FR); DE LAMBERTERIE, Antoine, 93012 BOBIGNY Cedex (FR); MBATA, Samira, 93012 BOBIGNY Cedex (FR); DUBOIS, Vincent, 93012 BOBIGNY Cedex (FR); AMIEL, François-Xavier, 93012 BOBIGNY Cedex (FR); CANONNE, Thomas, 93012 BOBIGNY Cedex (FR)
(74) Mandataire: Valeo Visibility

(56) Documents cités:
- US-A1- 2005 226 123
- US-A1- 2013 222 757
- US-A1- 2017 082 261
- US-B1- 6 352 359

## Description

Le domaine technique de l'invention est celui des modules lumineux pour l'éclairage et/ou la signalisation pour véhicule automobile.

Les véhicules automobiles sont équipés de module lumineux, permettant la projection d'un faisceau permettant l'éclairage de la route sur laquelle le véhicule progresse, ou encore la signalisation du véhicule à un usager tiers de la route.

Ces modules lumineux comportent en général au moins une source lumineuse ainsi qu'au moins un élément de déviation optique agencé pour dévier les rayons lumineux émis par la source lumineuse vers au moins une lentille de mise en forme de façon à obtenir un faisceau lumineux répondant à la fois aux besoins de l'utilisateur du véhicule et aux normes réglementaires, qu'il soit de signalisation ou d'éclairage. Cependant, la complexité des normes réglementaires nécessite le plus souvent d'utiliser plusieurs lentilles et/ou éléments de déviation optique, ce qui complexifie la conception, la production et l'assemblage d'un tel module lumineux et augmente le coût de fabrication du véhicule.

Des solutions ont été développées, notamment dans le but de proposer un module lumineux comprenant un minimum de composants optiques, pour la réalisation d'un maximum de fonction d'éclairage et/ou de signalisation. Ce type de module lumineux se heurte cependant aux spécifications très précises des normes à respecter, et la conception d'un tel module lumineux est souvent lourde et couteuse, le produit obtenu répondant de plus rarement de façon pleine et entière au problème soulevé. Le document US 6 352 359 B1 divulgue une lentille de mise en forme de rayons lumineux pour un module lumineux d'éclairage d'un véhicule automobile.

La présente invention se propose de pallier à ces inconvénients et d'offrir un module lumineux comprenant une source lumineuse, éventuellement un élément de déviation optique pour diriger les rayons lumineux émis vers une unique lentille de mise en forme, le module lumineux répondant de façon optimale à la fois aux besoins des utilisateurs et aux normes de régulation édictées par les pouvoirs publics.

L'objet de l'invention est un module lumineux d'éclairage et/ou de signalisation d'un véhicule automobile, comportant au moins un ensemble émetteur de rayons lumineux et une lentille de mise en forme de rayons lumineux, comportant une face d'entrée des rayons lumineux et une face de sortie opposée à la face d'entrée, la lentille présentant une forme de lentille plate dont la face de sortie est munie de prismes formant une structure de Fresnel, au moins un de ces prismes étant muni sur une face extérieure de structures diffractives, et dont la face d'entrée est munie au moins partiellement de microstructures.

Par lentille plate, ou peu bombée, on entend une lentille dont l'épaisseur moyenne est faible par rapport au diamètre, ou par rapport à la plus grande dimension dans le plan d'allongement principal de la lentille. En d'autres termes, une lentille est plate, ou peu bombée selon la variation d'épaisseur de la lentille, l'épaisseur moyenne est d'une valeur inférieure à 20 % dudit diamètre ou de ladite plus grande dimension, alors que le même ratio pour une lentille convergente, sphérique ou asphérique, est de l'ordre de 50%.

Par prisme, il convient de comprendre tout motif participant à former une structure de Fresnel, la dimension et l'inclinaison de ce motif étant définies en fonction de la puissance optique de la lentille sphérique qu'il permet de remplacer. Plus particulièrement, tous les motifs, ou prismes, agencés sur la face de sortie peuvent former une structure de Fresnel, la lentille plate étant une lentille de Fresnel. Les prismes formant la structure de Fresnel présentent notamment une face optique et une face de dépouille, et chacune de ces faces, notamment la face optique, peut présenter un profil droit, ou bien suivre une courbe de manière à contrôler plus précisément le faisceau lumineux.

Une lentille de mise en forme agencée selon l'invention permet ainsi de réaliser plusieurs fonctions : la présence d'une structure de Fresnel sur la face de sortie d'une lentille plate permet d'obtenir la même puissance optique qu'une lentille conventionnelle, sphérique ou asphérique, plus encombrante, et la présence de structures diffractives sur la face extérieure de ces motifs, c'est-à-dire une face optique du motif tournée vers la périphérie, ou l'extérieur, de la lentille, permet de corriger tout ou partie du chromatisme de la lentille, notamment lors de la projection par la lentille de rayons pour la formation d'un faisceau à coupure. La présence de microstructures optiques sur la face d'entrée de la lentille participe au floutage de l'image projetée, ce qui est notamment utile, là encore, dans le cas d'application d'une projection d'un faisceau à coupure, afin de diminuer la perception du chromatisme pouvant potentiellement apparaitre à la jonction entre la zone éclairée et la zone non éclairée. On comprend que la présence des microstructures optiques en face d'entrée de rayons permet de diminuer le nombre de structures diffractives nécessaires pour réaliser cette fonction de réduction du chromatisme. Cela est intéressant en ce que la réalisation des structures diffractives est difficile à mettre en oeuvre et qu'il est préférable de pouvoir les espacer, et cela est aussi intéressant car les structures diffractives peuvent avoir un effet d'éblouissement du fait de l'éclatement des rayons en sortie de lentille. Des modes additionnels de réalisation de l'invention sont également définis dans les revendications dépendantes.

La lentille de mise en forme peut comprendre avantageusement l'une quelconque au moins des caractéristiques suivantes prises seules ou en combinaison :
- les prismes s'étendent de façon continue sur la face de sortie de la lentille. De façon continue signifie que les prismes sont réalisés sans interruption depuis une portion centrale jusqu'en périphérie de la lentille, un prisme étant toujours agencé en contact avec au moins un prisme adjacent,
- les prismes sont répartis entre une zone centrale de la face de sortie, dans laquelle la face extérieure, ou face optique, des prismes est lisse, et une zone périphérique de la face de sortie, dans laquelle la face extérieure des prismes est munie desdites structures diffractives. A titre d'exemple non limitatif, on pourra prévoir une zone centrale de la face de sortie d'un diamètre compris entre 5 et 20 millimètres dans lequel aucune structure diffractive n'est agencée sur les prismes participant à former la structure de Fresnel,
- un prisme est caractérisé par une hauteur comprise entre 1 micromètre et 1 millimètre. La hauteur des prismes est comprise entre 50 et 300 micromètres. La hauteur d'un prisme est mesurée entre un sommet de ce prisme et un plan passant par des points de contact entre ce prisme et les prismes adjacents, selon une direction perpendiculaire à ce plan. On comprend que le sommet d'un prisme est le point du prisme le plus éloigné de la couche centrale de la lentille,

- les prismes présentent entre eux un pas compris entre 100 micromètres et 1 millimètre, mesuré entre le sommet d'un premier prisme et le sommet d'un deuxième prisme directement voisin. Le pas entre les prismes peut être régulier sur toute la face de sortie,
- les structures diffractives présentent une hauteur comprise entre 0,1 et 10 micromètres. La hauteur d'une structure diffractive est mesurée entre un sommet de la structure diffractive et un plan passant par une face extérieure du prisme portant la structure diffractive, selon une direction perpendiculaire au plan considéré,
- la hauteur des structures diffractives s'agrandit au fur et à mesure de l'éloignement du centre de la face de sortie de la lentille. L'évolution de la hauteur des structures diffractives est soit constante, la différence de hauteur entre deux structures diffractives adjacentes étant la même quelle que soit la paire de structures diffractives considérées, soit progressive, la différence de hauteur entre deux structures diffractives adjacentes proches du centre de la face de sortie de la lentille étant plus faible que la différence de hauteur entre deux structures diffractives adjacentes plus éloignées du centre. On pourra prévoir une hauteur moyenne de ces structures diffractives sensiblement égale à 1 micromètre,
- les structures diffractives agencées sur un prisme présentent un pas compris entre 1 micromètre et 1 millimètre. Le pas d'une structure diffractive est mesuré entre un premier point de contact entre une structure diffractive et une première structure diffractive adjacente et un deuxième point de contact entre une structure diffractive et une deuxième structure diffractive adjacente,
- le pas moyen entre les structures diffractives d'un prisme est plus grand que le pas moyen entre les structures diffractives d'un prisme voisin disposé entre le prisme et la bordure extérieure de la lentille. Par exemple, on pourra prévoir un pas moyen sensiblement égal à 500 micromètres vers le centre de la face de sortie et un pas moyen sensiblement égal à 15 micromètres vers les bords périphériques de cette face de sortie,
- les prismes sont agencés sur la face de sortie sous forme des motifs en anneaux ou en portions d'anneaux concentriques, le centre des anneaux ou des portions d'anneaux étant confondu avec l'axe optique de la lentille,
- les prismes agencés sur la face de sortie sont asymétriques en rotation, c'est-à-dire qu'un prisme s'étendant à une distance donnée de l'axe optique de la lentille, formant un anneau ou des portions d'anneaux de centre l'axe optique, présente une dimension ou une inclinaison variable le long de cet anneau ou de ces portions d'anneaux. Notamment, l'asymétrie pourra être telle que la puissance prismatique est variable selon la position verticale des prismes sur la lentille et telle que la puissance prismatique est constante selon la position horizontale des prismes sur cette lentille, étant entendu que les notions de verticalité et d'horizontalité s'entendent par rapport à la position de la lentille lorsque le module lumineux est installé sur le véhicule. Chaque prisme présentant une face extérieure, ou face optique, et une face intérieure, ou face de dépouille, il convient de noter que l'asymétrie en révolution peut concerner tout aussi bien les faces optiques que les faces de dépouilles, selon l'effet optique recherché. A titre d'exemple, on pourra faire varier l'inclinaison de la face optique des prismes pour diminuer la perception du chromatisme, et/ou faire varier l'inclinaison de la face de dépouille pour limiter l'éblouissement potentiel par le faisceau généré,
- la puissance prismatique est plus faible pour les prismes amenés à être disposés dans la partie basse de la lentille. Cette disposition est adoptée afin d'éviter une trop grande diffusion des rayons provenant de cette partie basse et d'éviter ainsi un éblouissement potentiel d'un observateur. Il convient de noter que la présence combinée des microstructures en face d'entrée de rayons et de structures diffractives sur les prismes en face de sortie de ces rayons permet de diminuer le nombre de ces structures diffractives nécessaires pour diminuer le chromatisme à la coupure du faisceau, et donc de diminuer le risque d'éblouissement d'un observateur. Dès lors, l'asymétrie en rotation des prismes doit être moins prononcé, ce qui impose des contraintes de fabrication plus respectables. Une telle asymétrie en rotation des prismes de Fresnel peut notamment être mise en oeuvre dans une lentille asymétrique en révolution,

- la face d'entrée des rayons est convexe. La convexité d'une face de la lentille est définie par rapport à la lentille elle-même, c'est-à-dire par rapport à une couche centrale de celle-ci ; en d'autres termes, la face d'entrée de la lentille est convexe en ce qu'elle présente un bossage, c'est-à-dire un profil courbe vers l'extérieur de la lentille : la partie centrale de la face d'entrée est ainsi plus à l'extérieur de cette lentille que ne le sont les bords de cette face d'entrée. Le fait que la face d'entrée soit convexe participe à l'augmentation de la puissance optique de la lentille et cela permet ainsi de limiter la puissance optique qui doit être générée par la face avant. Ainsi, les angles que doivent prendre les prismes formant la structure de Fresnel de la face avant se trouvent réduits, ce qui implique, les prismes étant agencés avec un pas constant, que l'on peut réduire la hauteur ou profondeur des prismes et faciliter ainsi leur réalisation,
- la courbure de la face d'entrée peut être calibrée de manière à ce que l'épaisseur au centre de la lentille soit inférieure à 10 millimètres. Dans ce contexte, on peut prévoir que l'épaisseur au centre de la lentille est plus importante que l'épaisseur en bordure de celle-ci, dans un rapport d'au moins 2 pour 1,
- la face d'entrée des rayons présente une zone de profil régulier, s'étendant sur une majeure partie de sa surface, et une zone de rupture du profil,
- cette zone de rupture du profil peut notamment être réalisée par un enlèvement de matière de la lentille au niveau de la face d'entrée, et elle peut être agencée en périphérie de cette face d'entrée. On comprend que dans cette zone de rupture du profil, la déviation des rayons lumineux est modifiée, et l'on dispose cette zone de rupture avantageusement dans une partie supérieure de la lentille, pour que les rayons dont la déviation est amplifiée soient rabattus en sortie de la lentille. Avec un tel agencement, dans lequel la zone de rupture de profil est une portion supérieure de la lentille lorsque celle-ci est en place sur le véhicule, les rayons incidents à la zone de rupture de profil sont dirigés vers le bas, ce qui limite là encore l'éblouissement potentiel des usagers de la route. Une telle zone de rupture permet notamment d'améliorer la fusion entre deux faisceaux différents, par exemple le faisceau route et le faisceau code, dans le cas de modules bi-fonctions,
- les microstructures ménagées sur la face d'entrée sont localisées au moins dans la zone de profil régulier, et elles peuvent s'étendre en outre dans la zone de rupture de profil,
- les microstructures sont ménagées sur la face d'entrée des rayons de manière à présenter une succession de dépressions et/ou de bosses de faible profondeur ou épaisseur,
- les microstructures présentent une largeur similaire d'une microstructure à l'autre, la largeur étant leur dimension selon une direction perpendiculaire à une direction longitudinale, la direction longitudinale étant une direction parallèle à un axe optique du module lumineux,
- des microstructures voisines présentent entre elles un pas constant qui peut prendre une valeur compris entre 0,1 millimètre à 2 millimètres. Les microstructures sont agencées de sorte que chaque microstructure s'étend à une distance comprise entre 0,1 et 2 millimètres d'une microstructure voisine,
- la profondeur des microstructures peut varier depuis le centre de la face de sortie de la lentille jusqu'à sa périphérie,
- une microstructure est également caractérisée par sa profondeur. On préfère ici une largeur similaire de chacune des microstructures plutôt qu'une profondeur similaire, plus pour des raisons de rendu visuel pour un observateur extérieur que pour des raisons d'efficacité d'éclairage. On comprend bien entendu que l'on pourrait mettre en oeuvre l'une ou l'autre des alternatives sans sortir du contexte de l'invention,
- les microstructures ménagées sur la face d'entrée sont espacées les uns des autres par au moins un creux. Un creux entre deux microstructures a une profondeur de 1 à 10 micromètres.

La présente invention concerne également un module lumineux comportant au moins un ensemble émetteur de rayons lumineux et une lentille de mise en forme de rayons selon l'aspect précédent. Par ensemble émetteur, on comprend que le module lumineux peut comporter une ou plusieurs sources de lumière formant un même ensemble émetteur, positionné par rapport au foyer objet de la lentille de mise en forme de rayons, et le cas échéant associé à un réflecteur, pour diriger les rayons de façon appropriée sur la face d'entrée de la lentille, afin que les rayons émis par cet ensemble émetteur sortent principalement par la première portion de la face de sortie de la lentille pour former un faisceau d'éclairage et/ou de signalisation réglementaire.

La présente invention concerne également un projecteur de véhicule automobile comportant un module lumineux tel que décrit précédemment, le projecteur comportant un boîtier pour loger au moins ce module lumineux, ledit boîtier étant fermé d'une glace de protection.

D'autres caractéristiques et avantages de la présente invention apparaitront plus clairement à l'aide de la description et des dessins parmi lesquels :
- la figure 1 est une vue en coupe d'un module lumineux comprenant un source lumineuse et une lentille de mise en forme des rayons selon l'invention,
- la figure 2 est une vue en coupe d'une lentille selon l'invention,
- la figure 3 est une vue de dessus de la lentille selon l'invention,
- la figure 4 est une vue en coupe d'un détail de la lentille selon l'invention et illustrée à la figure 2 par la référence A,
- la figure 5 est une vue en coupe d'un détail de la lentille selon l'invention et illustrée à la figure 4 par la référence B,
- la figure 6 est une vue en coupe d'un détail de la lentille selon l'invention et illustrée à la figure 5 par la référence C.

Il faut tout d'abord noter que si les figures exposent l'invention de manière détaillée pour sa mise en oeuvre et qu'elles peuvent servir à mieux définir l'invention le cas échéant, ces figures n'exposent qu'une partie des exemples de réalisation possibles selon l'invention.

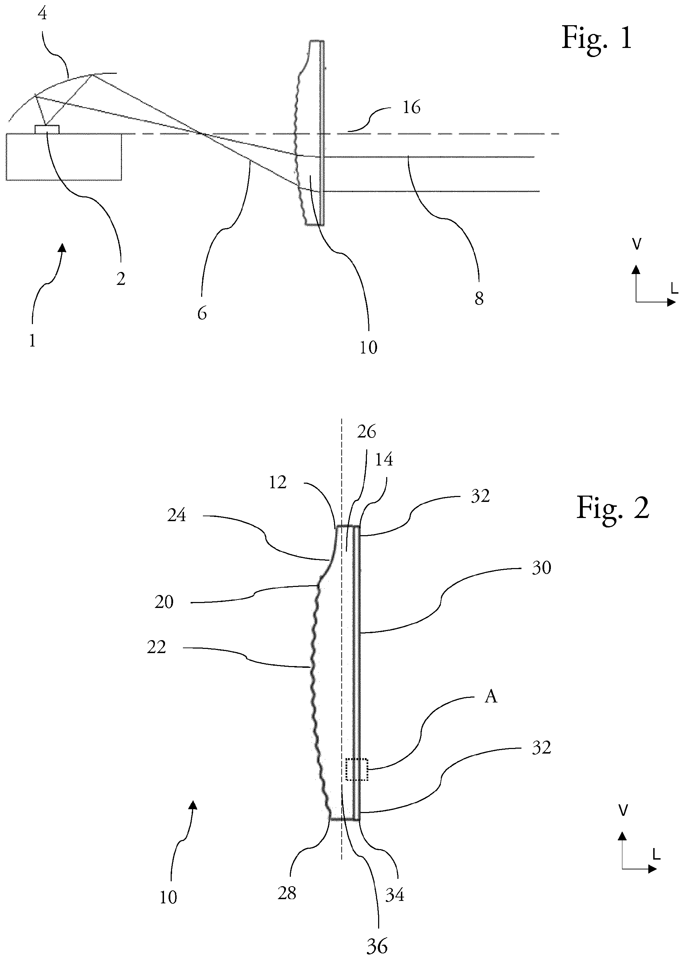

Est ainsi représenté sur la figure 1 un exemple de module lumineux 1, comprenant un ensemble émetteur 5 ainsi qu'une lentille 10 de mise en forme des rayons lumineux 6, pouvant être installé sur un véhicule automobile.

Le module lumineux illustré ici comprend une source lumineuse 2 unique en guise d'ensemble émetteur 5. La source lumineuse 2 émet un rayonnement lumineux en direction d'un réflecteur 4, les rayons lumineux 6 étant réfléchis par ce réflecteur 4, disposé en regard de la source lumineuse 2, en direction de la lentille 10 de mise en forme. La source lumineuse 2 utilisée peut-être une source lumineuse à filament, à plasma, à gaz, ou comprendre des éléments électroluminescents tels qu'une diode électroluminescente LED, une diode électroluminescente organique OLED, une diode électroluminescente polymérique PLED, ou toute source lumineuse répondant aux contraintes réglementaires du domaine automobile.

Les rayons lumineux 6 réfléchis atteignent ensuite la lentille 10 de mise en forme, au travers de laquelle ils sont déviés de façon à former en sortie de la lentille un faisceau lumineux 8 réglementaire conforme aux souhaits d'un utilisateur du véhicule, autant dans sa forme que sa direction. Le faisceau lumineux 8 est ainsi projeté, par exemple vers l'avant du véhicule pour éclairer la route empruntée ou pour assurer une fonction de signalisation. Le faisceau lumineux 8 obtenu est de type divergent, c'est-à-dire que les rayons lumineux qui le constituent semblent venir du même point. De plus, le faisceau lumineux 8 obtenu est collimaté, c'est-à-dire que les rayons lumineux qui le composent sont parallèles ou quasiment parallèles, ce qui permet d'obtenir un éclairage longue portée homogène et dont plus confortable pour le conducteur du véhicule.

La lentille 10 de mise en forme comprend une face d'entrée 12 des rayons lumineux 6, ainsi qu'une face de sortie 14 de ces rayons lumineux 6, la face de sortie 14 étant opposée à la face d'entrée 12 par rapport à une couche centrale 36 de la lentille 10. Les rayons lumineux 6 émis par la source lumineuse 2 atteignent la face d'entrée 12 et traversent la lentille 10 pour sortir via la face de sortie 14 de la lentille 10.

La lentille 10 de mise en forme a la forme d'une lentille plate, c'est-à-dire une lentille dont une épaisseur, c'est-à-dire la dimension entre la face d'entrée 12 et la face de sortie 14, est faible, c'est-à-dire inférieure à la plus grande dimension de la face de sortie 14.

Dans l'exemple exposé ici, la lentille 10 est de forme circulaire, cette forme circulaire s'étendant autour d'un axe 16 formant sensiblement l'axe optique de la lentille 10. On comprendra à la lecture de ce qui suit que d'autres formes de lentille plate peuvent être envisagées.

De même, la lentille 10 est ici positionnée de façon perpendiculaire à l'axe 16, mais on comprendra que cet agencement est donné ici à titre d'exemple et ne saurait restreindre la portée de l'invention ni même illustré un mode préférentiel de réalisation.

La lentille 10 de mise en forme est plus particulièrement visible sur la figure 2. Sur cette figure 2, on peut voir que la face d'entrée 12 a une forme convexe, la lentille 10 étant plus épaisse dans sa partie la plus proche de l'axe 16 que dans une partie plus éloignée de l'axe 16. Cette configuration est visible notamment par l'aspect bombée de la face d'entrée 12 de la lentille 10.

La face d'entrée 12 comporte également une pluralité de microstructures 20, agencées pour améliorer l'homogénéité du faisceau lumineux 8 émis par le module lumineux 1, ce qui améliore le confort visuel du conducteur en limitant les possibles contrastes existants au sein du faisceau lumineux 8. Les microstructures 20 présentent la forme d'une succession de dépressions et/ou de bosses, répartis régulièrement sur la face d'entrée 12 de la lentille 10. Ces dépressions et/ou ces bosses présentent respectivement des épaisseurs ou des profondeurs de dimensions de l'ordre du micron, de sorte que ces microstructures sont imperceptibles à l'œil nu.

De par leur forme, ces microstructures 20 forment ainsi un grainage sur au moins une partie de la face d'entrée 12, et plus particulièrement sur une zone de profil régulier 22. Dans l'exemple illustré, cette zone de profil régulier 22 s'étend sur la totalité de la face d'entrée 12, exception faite d'une zone de rupture du profil 24 disposée dans une partie périphérique 25, c'est-à-dire la partie de la lentille s'étendant le plus à distance de l'axe 16 selon une direction perpendiculaire à cet axe 16. Plus particulièrement, la zone de rupture de profil 24 est disposée dans une partie supérieure 26 de la lentille 10. La partie périphérique 25 est ainsi dite supérieure relativement à la position de la lentille 10 dans le véhicule, cette position correspondant à l'orientation donnée sur la figure 2.

La zone de rupture du profil 24 forme une découpe concave dans l'épaisseur de la partie supérieure 26 de la lentille 10 plate. En conformité avec ce qui a été écrit précédemment pour la forme générale convexe de la face d'entrée 12, la découpe est concave dans le sens où un centre de la découpe est plus proche de la couche centrale 36 que des bords périphériques de ladite découpe.

Agencée de cette manière, la lentille 10 dévie de manière plus importante les rayons lumineux 6 atteignant la zone de rupture du profil 24, ce qui limite les rayons lumineux pouvant aveugler un conducteur d'un véhicule venant en sens opposé.

La zone de rupture du profil 24 est lisse, c'est-à-dire qu'elle ne comporte pas de microstructure 20. Les microstructures 20 présentes sur la face d'entrée 12 de la lentille 10 sont ainsi concentrées sur la zone de profil régulier 22.

Les microstructures 20 sont séparées les unes des autres par un pas constant. Ce pas est compris entre 0,1 et 2 millimètres. C'est la multiplication de ces microstructures 20 séparées par un pas constant en tout point de la face d'entrée 12 qui forme le grainage de la face d'entrée 12.

Les microstructures 20 peuvent chacune être définies par une largeur, qui est leur dimension dans une direction parallèle au plan dans lequel s'étend principalement la lentille 10 et par une profondeur, qui est leur dimension dans une direction perpendiculaire au plan dans lequel s'étend principalement la lentille 10.

La largeur d'une microstructure 20 est comprise entre 1 micromètre et 1 millimètre. Et la profondeur d'une microstructure 20 est comprise entre 1 micromètre et 1 millimètre.

Dans l'exemple exposé ici, les microstructures 20 ont toutes la même largeur et la même profondeur. On comprendra cependant qu'il est possible d'avoir des microstructures 20 dont la largeur, la profondeur et/ou l'espacement varient en fonction de la position de la microstructure 20 donnée sur la face d'entrée 12.

La face de sortie 14 de la lentille 10 est essentiellement plane, c'est-à-dire qu'elle s'étend dans un plan parallèle à un plan d'allongement principal de la couche centrale 36 de la lentille 10. En d'autres termes, la face de sortie 14 de la lentille 10 n'est ni convexe ni concave. Ainsi, la face de sortie 14 ne présente pas la convexité de la face d'entrée 12 ni la concavité de la découpe caractérisant la zone de rupture de profil 24. La face de sortie 14 est dite essentiellement plane dans la mesure où elle ne présente pas une surface lisse, la face de sortie 14 comprenant une pluralité de prismes 40, 41.

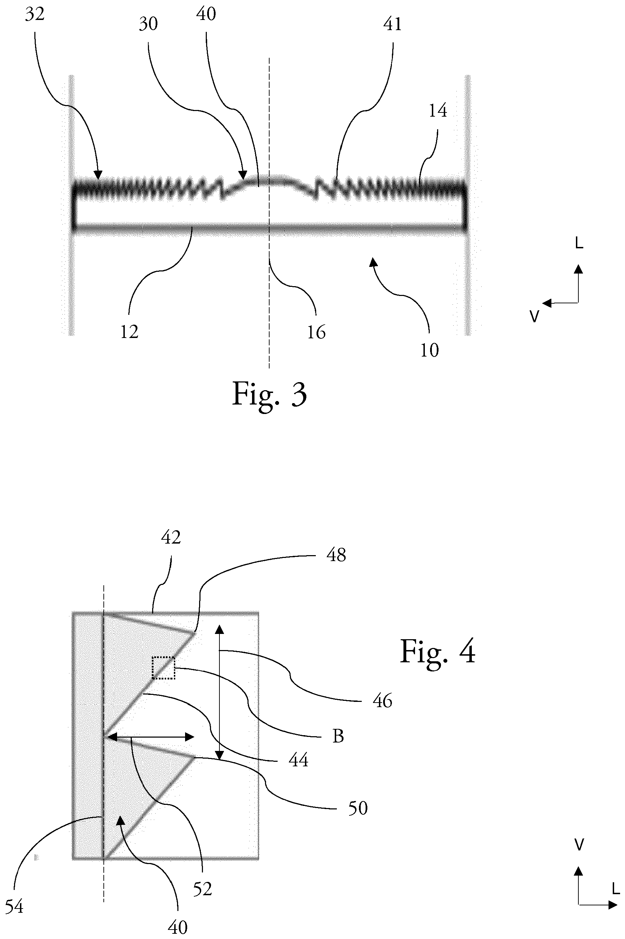

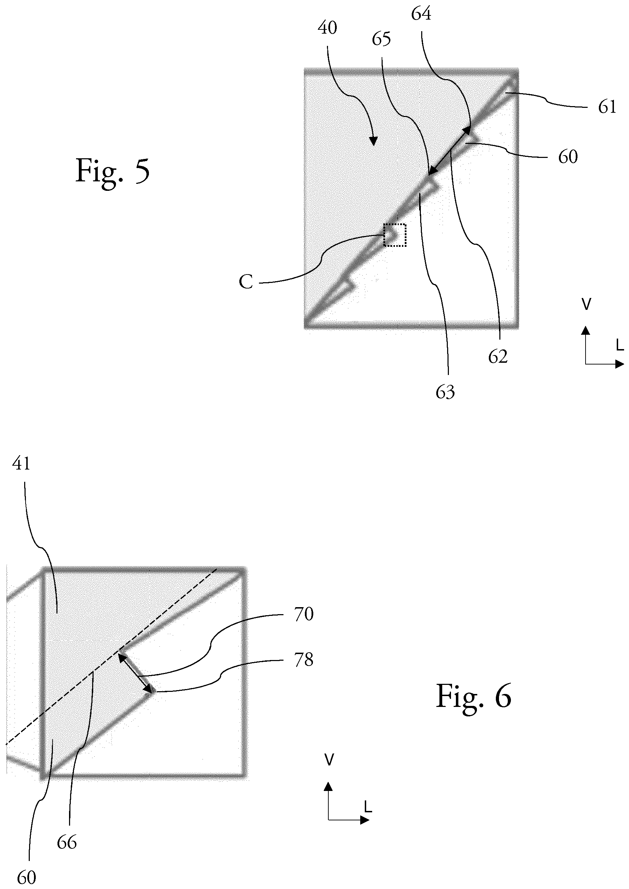

Les prismes 40, 41 disposés sur la face de sortie 14 forment une structure de Fresnel, et il est prévu des structures diffractives 60 sur plusieurs de ces prismes. L'agencement des prismes 40, 41 est illustré aux figures 3 et 4, la configuration des structures diffractives 60 étant décrite aux figures 5 et 6.

La face de sortie 14 comprend une zone centrale 30 et une zone périphérique 32. La zone périphérique 32 s'étend entre la zone centrale 30 de la lentille 10 et une bordure extérieure 34 qui délimite la lentille 10.

La figure 3 illustre plus particulièrement la zone centrale 30, la zone périphérique 35 et les prismes 40, 41 disposés sur ces zones.

La zone centrale 30 comprend un prisme 40 dit central, de forme hémisphérique. Ce prisme 40 central est positionné sur un axe optique de la lentille 10. Dans l'exemple illustré ici, l'axe optique de la lentille 10 correspond à l'axe 16 illustré sur la figure 1.

La zone périphérique 32 comprend une pluralité de prismes 41 dit périphériques, s'étendant en contact les uns des autres sans interruption, depuis le prisme 40 central jusqu'à la bordure extérieure 34 de la lentille 10. Un prisme 41 périphérique a une forme d'anneau, de section triangulaire. L'ensemble des prismes, c'est-à-dire le prisme 40 central et les prismes 41 périphériques, donne à la face de sortie 14 de la lentille 10 une forme de lentille de Fresnel.

La figure 4 illustre plus particulièrement l'agencement des prismes périphériques 41 sur la face de sortie 14 de la lentille 10 de mise en forme.

Un prisme périphérique est notamment caractérisé par une hauteur 52 comprise entre 1 micromètre et 1 millimètre. Dans l'exemple exposé ici, la hauteur 52 des prismes 41 est comprise entre 50 et 300 micromètres. La hauteur 52 d'un prisme est mesurée entre un sommet 48 du prisme et un plan 54 passant par des points de contact entre le prisme et les prismes périphériques adjacents, selon une direction perpendiculaire à ce plan 54. Le sommet 48 d'un prisme est le point du prisme le plus éloigné de la couche centrale 36 de la lentille 10.

Les prismes présentent entre eux un pas 46 compris entre 100 micromètres et 1 millimètre, mesuré entre le sommet 48 du prisme, et un deuxième sommet 50 d'un prisme adjacent. Les prismes de la face de sortie 14 ont le même pas 46.

Les prismes 41 périphériques sont asymétriques en rotation. En d'autres termes, la hauteur 52 d'un prisme 41 périphérique varie selon le point du prisme 41 périphérique considéré, le pas 46 entre deux prismes périphériques directement adjacents étant constant en tout point de la face de sortie 14 de la lentille 10.

Dans cette disposition, la puissance prismatique d'un prisme 41 périphérique donné diffère selon le point considéré, la puissance prismatique augmentant en même temps que l'éloignement dans la direction verticale V par rapport au centre 16 de la lentille 10. Ainsi, la puissance prismatique d'un premier point situé sur une partie du prisme 41 disposé dans la partie supérieure 26 de la lentille 10 étant plus importante que la puissance prismatique d'un deuxième point, image du premier point par une symétrie par rapport à un plan horizontal passant par l'axe 16. La partie supérieure 26 de la lentille 10 est supérieure relativement à la position de la lentille 10 dans le véhicule, cette position correspondant à l'orientation donnée sur la figure 2.

Deux points du prisme périphérique 41 images l'un de l'autre par une symétrie par rapport à un plan vertical passant par l'axe 16 ont la même puissance prismatique.

La puissance optique de la lentille 10 est ainsi différente selon le point de la face de sortie 14 considéré. Dans cet agencement, la puissance optique moyenne de la partie supérieure 26 de la lentille est plus importante que la puissance optique moyenne d'une partie inférieure 28 de la lentille 10, la puissance optique d'un prisme 41 périphérique étant plus important dans la partie supérieure de la lentille que dans la partie inférieure de cette lentille.

Un prisme 41 périphérique a une face intérieure 42, ou face de dépouille, dirigée en direction de la zone centrale 30 de la lentille 10, et une face extérieure 44, ou face optique, qui est dirigée vers la bordure extérieure 34 de la lentille 10. Les rayons lumineux 6 traversant la lentille 10 sont susceptibles de sortir par la face extérieure 44.

La face extérieure 44, ou face optique, du prisme 41 périphérique comprend au moins une structure diffractive 60, la face intérieure 42, ou face de dépouille, étant lisse, c'est-à-dire dépourvue de structure diffractive 60.

Dans l'exemple illustré, le prisme 40 central, qui comme expliqué précédemment peut présenter une forme sphérique ou asphérique, est dépourvue de structures diffractives 60 à sa surface. Plus particulièrement, on peut prévoir une lentille sur une face de laquelle une zone centrale, à savoir le prisme central et quelques-uns des prismes périphériques, est dépourvue de structures diffractives, à titre d'exemple sur un diamètre de 5 à 20 millimètres.

Les structures diffractives 60 ont une forme de prisme triangulaire, dont la base est en contact avec le prisme, et notamment le prisme 41 périphérique, portant la structure diffractive 60.

L'agencement des structures diffractives 60 sur la face extérieure 44 des prismes permet de limiter l'apparition d'aberrations chromatiques au sein ou en bordure du faisceau lumineux collimaté, en corrigeant la décomposition de la lumière traversant la lentille 10.

Les prismes et les structures diffractives 60 sont autant d'éléments optiques, c'est-à-dire d'éléments ayant un impact sur la diffusion des rayons lumineux 6 émis par la source lumineuse 2, permettant d'obtenir le faisceau lumineux 8 souhaité.

La figure 5 illustre plus particulièrement des structures diffractives 60 disposées sur la face extérieure 44 d'un prisme 41 périphérique et certaines de leur caractéristique.

Deux structures diffractives 60 adjacentes sont séparées par un pas 62 compris entre 1 micromètre et 1 millimètres. Plus particulièrement, ce pas 62 est mesuré entre un premier point de contact 64 entre une structure diffractive 60 et une première structure diffractive adjacente 61 et un deuxième point de contact 65 entre une structure diffractive 60 et une deuxième structure diffractive adjacente 63.

Le pas 62 moyen entre les structures diffractives 60 d'un prisme 41 périphérique est plus grand que le pas 62 moyen entre les structures diffractives 60 d'un prisme voisin disposé entre le prisme 41 périphérique et la bordure extérieure de la lentille 10.

La figure 6 illustre plus particulièrement certaines caractéristiques d'une structure diffractive 60.

La structure diffractive 60 a une hauteur 70 comprise entre 0.1 et 10 micromètres. La hauteur 70 d'une structure diffractive 60 est mesurée entre le sommet 78 de la structure diffractive 60 et un plan 66 passant par la face extérieure 44 du prisme portant la structure diffractive 60, selon une direction perpendiculaire au plan considéré.

Sur un prisme 41 périphérique donné, les structures diffractives 60 ont une hauteur 70 égale ou sensiblement égale, eu égard aux tolérances de fabrication. La hauteur 70 des structures diffractives 60 d'un premier prisme 41 périphérique donné est inférieure à la hauteur 70 des structures diffractives 60 d'un second prisme 41 périphérique, disposé entre le premier prisme 40 considéré et la bordure extérieure 34 de la lentille 10.

Bien entendu, diverses modifications peuvent être apportées par l'homme du métier à la lentille de mise en forme selon l'invention, dès lors que l'on met en oeuvre une face de sortie munie de prismes dont au moins un est muni sur une face extérieure de structures diffractives, et une face d'entrée munie au moins partiellement de microstructures.

En tout état de cause, l'invention ne saurait se limiter au mode de réalisation spécifiquement décrit dans ce document, et s'étend en particulier à tous moyens équivalents et à toute combinaison techniquement opérante de ces moyens.

## Revendications

1. Module lumineux (1) d'éclairage et/ou de signalisation d'un véhicule automobile comprenant au moins un ensemble émetteur de rayons lumineux et une lentille (10) de mise en forme de rayons lumineux (6) comportant une face d'entrée (12) des rayons lumineux (6) et une face de sortie (14) opposée, **caractérisée en ce qu'**elle présente une forme de lentille plate dont la face de sortie (14) est munie de prismes formant une structure de Fresnel (40, 41), au moins un de ces prismes étant muni sur une face extérieure (44) de structures diffractives (60), et dont la face d'entrée (12) est munie au moins partiellement de microstructures (20).

2. Module lumineux (1) d'éclairage et/ou de signalisation d'un véhicule automobile selon la revendication précédente, **caractérisé en ce que** les prismes (40, 41) s'étendent de façon continue sur la face de sortie (14) de la lentille (10).

3. Module lumineux (1) d'éclairage et/ou de signalisation d'un véhicule automobile selon l'une des revendications précédentes, **caractérisé en ce que** les prismes (40, 41) sont répartis entre une zone centrale (30) de la face de sortie (14), dans laquelle la face extérieure des prismes est lisse, et une zone périphérique (32) de la face de sortie (14), dans laquelle la face extérieure (44) des prismes (41) est munie desdites structures diffractives (60).

4. Module lumineux (1) d'éclairage et/ou de signalisation d'un véhicule automobile selon l'une des revendications précédentes, **caractérisé en ce que** les structures diffractives (60) présentent une hauteur (70) s'agrandissant au fur et à mesure de l'éloignement d'un centre (14) de la face de sortie (16) de la lentille (10).

5. Module lumineux (1) d'éclairage et/ou de signalisation d'un véhicule automobile selon l'une des revendications précédentes, **caractérisé en ce que** les structures diffractives (60) agencées sur un prisme (41) présentent entre elles un pas (62), le pas (62) moyen entre les structures diffractives (60) d'un prisme (41) étant plus grand que le pas (62) moyen entre les structures diffractives (60) d'un prisme (41) voisin disposé vers la périphérie de la lentille.

6. Module lumineux (1) d'éclairage et/ou de signalisation d'un véhicule automobile selon l'une des revendications précédentes, **caractérisé en ce que** les prismes (40, 41) sont agencés sur la face de sortie (14) sous forme des motifs en anneaux ou en portions d'anneaux concentriques.

7. Module lumineux (1) d'éclairage et/ou de signalisation d'un véhicule automobile selon la revendication précédente, **caractérisé en ce que** les prismes (41) agencés sur la face de sortie (14) sont asymétriques en rotation.

8. Module lumineux (1) d'éclairage et/ou de signalisation d'un véhicule automobile selon l'une des revendications précédentes, **caractérisé en ce que** la face d'entrée (12) de la lentille (10) est convexe.

9. Module lumineux (1) d'éclairage et/ou de signalisation d'un véhicule automobile selon l'une des revendications précédentes, **caractérisé en ce que** la face d'entrée (12) de la lentille (10) présente une zone de profil régulier (22), s'étendant sur une majeure partie de sa surface, et une zone de rupture du profil (24).

10. Module lumineux (1) d'éclairage et/ou de signalisation d'un véhicule automobile selon l'une des revendications précédentes, **caractérisé en ce que** les microstructures (20) sont ménagées sur la face d'entrée de la lentille (10) de manière à présenter une succession de dépressions et/ou de bosses.

11. Projecteur de véhicule automobile comportant un module lumineux (1) selon l'une des revendications précédentes, **caractérisé en ce qu'**il comporte un boîtier pour loger au moins ce module lumineux (1), ledit boîtier étant fermé d'une glace de protection.

## Patentansprüche

1. Leuchtmodul (1) zur Beleuchtung und/oder Signalgebung eines Kraftfahrzeugs, das mindestens eine Emittereinheit von Lichtstrahlen und eine Linse (10) zur Formung von Lichtstrahlen (6) enthält, die eine Eingangsseite (12) der Lichtstrahlen (6) und eine gegenüberliegende Ausgangsseite (14) aufweist, **dadurch gekennzeichnet, dass** sie die Form einer flachen Linse aufweist, deren Ausgangsseite (14) mit Prismen versehen ist, die eine Fresnelstruktur (40, 41) bilden, wobei mindestens eines dieser Prismen auf einer Außenseite (44) mit Beugungsstrukturen (60) versehen ist, und deren Eingangsseite (12) zumindest teilweise mit Mikrostrukturen (20) versehen ist.

2. Leuchtmodul (1) zur Beleuchtung und/oder Signalgebung eines Kraftfahrzeugs nach dem vorhergehenden Anspruch, **dadurch gekennzeichnet, dass** die Prismen (40, 41) sich durchgehend auf der Ausgangsseite (14) der Linse (10) erstrecken.

3. Leuchtmodul (1) zur Beleuchtung und/oder Signalgebung eines Kraftfahrzeugs nach einem der vorhergehenden Ansprüche, **dadurch gekennzeichnet, dass** die Prismen (40, 41) zwischen einem zentralen Bereich (30) der Ausgangsseite (14), in dem die Außenseite der Prismen glatt ist, und einem Umfangsbereich (32) der Ausgangsseite (14) verteilt sind, in dem die Außenseite (44) der Prismen (41) mit den Beugungsstrukturen (60) versehen ist.

4. Leuchtmodul (1) zur Beleuchtung und/oder Signalgebung eines Kraftfahrzeugs nach einem der vorhergehenden Ansprüche, **dadurch gekennzeichnet, dass** die Beugungsstrukturen (60) eine Höhe (70) aufweisen, die sich mit zunehmender Entfernung von einer Mitte (14) der Ausgangsseite (16) der Linse (10) vergrößert.

5. Leuchtmodul (1) zur Beleuchtung und/oder Signalgebung eines Kraftfahrzeugs nach einem der vorhergehenden Ansprüche, **dadurch gekennzeichnet, dass** die auf einem Prisma (41) eingerichteten Beugungsstrukturen (60) zwischen sich einen Abstand (62) aufweisen, wobei der mittlere Abstand (62) zwischen den Beugungsstrukturen (60) eines Prismas (41) größer ist als der mittlere Abstand (62) zwischen den Beugungsstrukturen (60) eines benachbarten Prismas (41), das zum Umfang der Linse hin angeordnet ist.

6. Leuchtmodul (1) zur Beleuchtung und/oder Signalgebung eines Kraftfahrzeugs nach einem der vorhergehenden Ansprüche, **dadurch gekennzeichnet, dass** die Prismen (40, 41) auf der Ausgangsseite (14) in Form von ringförmigen Mustern oder in Abschnitten konzentrischer Ringe eingerichtet sind.

7. Leuchtmodul (1) zur Beleuchtung und/oder Signalgebung eines Kraftfahrzeugs nach dem vorhergehenden Anspruch, **dadurch gekennzeichnet, dass** die auf der Ausgangsseite (14) eingerichteten Prismen (41) drehasymmetrisch sind.

8. Leuchtmodul (1) zur Beleuchtung und/oder Signalgebung eines Kraftfahrzeugs nach einem der vorhergehenden Ansprüche, **dadurch gekennzeichnet, dass** die Eingangsseite (12) der Linse (10) konvex ist.

9. Leuchtmodul (1) zur Beleuchtung und/oder Signalgebung eines Kraftfahrzeugs nach einem der vorhergehenden Ansprüche, **dadurch gekennzeichnet, dass** die Eingangsseite (12) der Linse (10) einen Bereich mit gleichmäßigem Profil (22), der sich über einem größeren Teil ihrer Fläche erstreckt, und einen Bereich der Unterbrechung des Profils (24) aufweist.

10. Leuchtmodul (1) zur Beleuchtung und/oder Signalgebung eines Kraftfahrzeugs nach einem der vorhergehenden Ansprüche, **dadurch gekennzeichnet, dass** die Mikrostrukturen (20) auf der Eingangsseite der Linse (10) vorgesehen sind, um eine Folge von Vertiefungen und/oder Wölbungen aufzuweisen.

11. Kraftfahrzeugscheinwerfer, der ein Leuchtmodul (1) nach einem der vorhergehenden Ansprüche aufweist, **dadurch gekennzeichnet, dass** er ein Gehäuse aufweist, um mindestens dieses Leuchtmodul (1) aufzunehmen, wobei das Gehäuse von einer Schutzscheibe verschlossen wird.

## Claims

1. Luminous lighting and/or signalling module (1) for a motor vehicle comprising at least one light-rayemitting assembly and a lens (10) for forming light rays (6) including an entrance face (12) for the light rays (6) and an opposite exit face (14), **characterized in that** said lens has a flat-lens shape the exit face (14) of which is equipped with prisms forming a Fresnel structure (40, 41), at least one of these prisms being equipped on an exterior face (44) with diffractive structures (60), and the entrance face (12) of which is at least partially equipped with microstructures (20).

2. Luminous lighting and/or signalling module (1) for a motor vehicle according to the preceding claim, **characterized in that** the prisms (40, 41) extend continuously over the exit face (14) of the lens (10).

3. Luminous lighting and/or signalling module (1) for a motor vehicle according to one of the preceding claims, **characterized in that** the prisms (40, 41) are distributed between a central zone (30) of the exit face (14), in which the exterior face of the prisms is smooth, and a peripheral zone (32) of the exit face (14), in which the exterior face (44) of the prisms (41) is equipped with said diffractive structures (60).

4. Luminous lighting and/or signalling module (1) for a motor vehicle according to one of the preceding claims, **characterized in that** the diffractive structures (60) have a height (70) that increases with distance from a centre (14) of the exit face (16) of the lens (10).

5. Luminous lighting and/or signalling module (1) for a motor vehicle according to one of the preceding claims, **characterized in that** the diffractive structures (60) arranged on a prism (41) have therebetween a pitch (62), the average pitch (62) between the diffractive structures (60) of a prism (41) being larger than the average pitch (62) between the diffractive structures (60) of a neighbouring prism (41) placed toward the periphery of the lens.

6. Luminous lighting and/or signalling module (1) for a motor vehicle according to one of the preceding claims, **characterized in that** the prisms (40, 41) are arranged on the exit face (14) in the form of concentric ring-section or ring patterns.

7. Luminous lighting and/or signalling module (1) for a motor vehicle according to the preceding claim, **characterized in that** the prisms (41) arranged on the exit face (14) are asymmetric in rotation.

8. Luminous lighting and/or signalling module (1) for a motor vehicle according to one of the preceding claims, **characterized in that** the entrance face (12) of the lens (10) is convex.

9. Luminous lighting and/or signalling module (1) for a motor vehicle according to one of the preceding claims, **characterized in that** the entrance face (12) of the lens (10) has a zone (22) of regular profile, extending over most of its area, and a zone (24) of rupture of the profile.

10. Luminous lighting and/or signalling module (1) for a motor vehicle according to one of the preceding claims, **characterized in that** the microstructures (20) are produced on the entrance face of the lens (10) so as to have a succession of depressions and/or embossments.

11. Motor-vehicle headlamp including a luminous module (1) according to one of the preceding claims, **characterized in that** it includes a casing for housing at least this luminous module (1), said casing being closed with a protective outer lens.
